# EUROPEAN PATENT SPECIFICATION

(11) **EP 3 763 136 B1**
(45) Date of publication and mention of the grant of the patent: **03.07.2024**
(21) Application number: 19763734.1
(22) Date of filing: 06.03.2019
(51) Int. Cl.: H04W 4/00, H04W 4/02, H04W 60/04, G06Q 90/00, G06Q 50/10, G06Q 10/20, G06Q 10/08, G06Q 10/02, G06Q 30/0601, G06Q 30/02, H04H 60/09, H04W 8/00, H04W 4/021, H04W 4/80, G06Q 30/0251, G06Q 30/0282

(54) **METHOD, SYSTEM AND DEVICES FOR CAUSING PROXIMITY-DEPENDENT ACTIVITY BY A MOBILE DEVICE**
VERFAHREN, SYSTEM UND VORRICHTUNGEN ZUR VERANLASSUNG EINER PROXIMITÄTSABHÄNGIGEN AKTIVITÄT DURCH EINE MOBILE VORRICHTUNG
PROCÉDÉ, SYSTÈME ET DISPOSITIFS POUR DÉCLENCHER UNE ACTIVITÉ DÉPENDANT DE LA PROXIMITÉ PAR UN DISPOSITIF MOBILE

(30) Priority: 09.03.2018 SE 1850266
(43) Date of publication of application: 13.01.2021
(73) Proprietor: Crunchfish Digital Cash AB, 211 19 Malmö (SE)
(72) Inventor: SAMUELSSON, Joachim, 252 84 Helsingborg (SE); SYLWANDER, Kristian, 218 38 Bunkeflostrand (SE)
(74) Representative: Ström & Gulliksson AB
(86) International application number: PCT/SE2019/050198
(87) International publication number: WO 2019/172831

(56) References cited:
- EP-A1- 2 453 713
- EP-A2- 1 445 894
- WO-A1-2017/095307
- US-A1- 2002 077 060
- US-A1- 2003 220 114
- US-A1- 2011 164 595
- US-A1- 2015 339 694
- US-A1- 2016 323 754
- US-A1- 2017 026 788

## Description

### TECHNICAL FIELD

The present invention generally relates to use of a mobile device for causing some kind of activity depending on a proximity of the mobile device to a physical location. More specifically, the invention relates to a method of causing proximity-dependent activity by a mobile device. The invention also relates to a mobile computing device for implementing the functionality of the mobile device in the method. In addition, the invention relates to an associated communication system.

### BACKGROUND

Along with the overwhelming market penetration of mobile devices such as smartphones and tablets during the last decade, it has become generally desirable to be able to use mobile devices not only as means for telecommunication, but also as tools for facilitating the everyday life of their users. Nowadays, mobile devices are used as miniaturized personal computing devices and also for different services in electronic or physical commerce, consumption of digital content, gaming, social networking, etc.

In various situations, it may be desirable to perform an action when a person is close to a physical location.

For instance, in a retail premise (e.g. shop, supermarket or mall), it may be desired to provide the person with information involving the articles offered at a particular spot in the premises, for instance test reports, fact sheets, culinary recipes, nutritional information, discount coupons, etc.

In an office premise, it may for instance be desired for a person to control office equipment when being in proximity thereof, or to cause placing of an order for a goods which needs to be replenished in the office, or for a service which is required for some office equipment.

In a residential premise, it may for instance be desired for a person to control home equipment when being in proximity thereof, or to cause placing of an order for a goods which needs to be replenished in the household, or for a service which is required for some equipment in the home.

In an industrial premise, it may for instance be desired for a worker to control industrial equipment when being in proximity thereof, or to order spare parts as needed. It may also be desired for an inspector, guard or manager to log checkpoints during a tour in the premise.

In an exhibition premise, it may for instance be desired for a visitor to retrieve information related to different exhibition objects when being near their respective spot of presentation.

In an outdoor scenery, it may for instance be desired for a tourist strolling around the scenery to get information or assistance when passing different attractions.

As a general inventive understanding behind this invention, the present inventors have realized that mobile devices may also be used as tools for causing some activity to be performed depending on a proximity of the mobile device to a physical location in a more flexible and convenient way than in the prior art. The present inventors have realized that there may be several key factors for success in this regard.

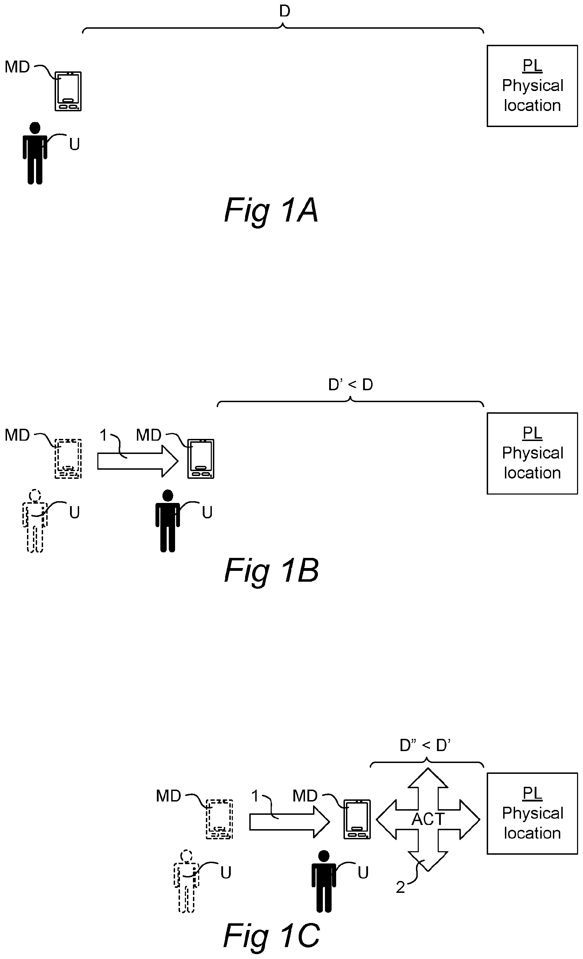

Reference is made to Figs 1A-1C, illustrating how a user U of a mobile device MD may be involved in proximity-based causing of activity. In Fig 1A, the mobile device MD and user U are at a distance D from a physical location PL. Because of the magnitude of the distance D to the physical location PL, no activity is yet to be caused.

In Fig 1B, the user U moves the mobile device MD closer to the physical location PL and is now at a shorter distance D'. However, the distance D' is still too far, and no activity is still to be caused.

Only once the user U has moved the mobile device MD much closer to the physical location PL, i.e. at only a small distance D", activity shall be caused. This is seen at 2 in Fig 1C.

One important factor is locational accuracy; the activity shall preferably only be performed when the user U and the mobile device MD are quite close to the physical location PL. This means that the activity 2 shall not be caused already in the situations shown in Fig 1A and Fig 1B, but only once the user U and the mobile device MD are proximate to the physical location PL, i.e. the situation shown in Fig 1C.

At the same time, speed is of essence. Once the user U and the mobile device MD are proximate to the physical location PL, i.e. have arrived at the situation shown in Fig 1C, the user U shall preferably not have to wait unduly long before the activity 2 is performed.

Moreover, only a minimum of manual intervention by the user U on the mobile device shall preferably be required in order for the activity 2 to be performed.

Additional background art is disclosed in US 2015/339694 A1, US 2003/220114 A1, US 2017/026788 A1 and US 2016/323754 A1.

As is clear from the above description, the present inventors have identified problems and shortcomings with the prior art. In line with the observations above, the present inventors have identified both the need for and the benefits of causing proximity-dependent activity by a mobile device.

### SUMMARY

It is accordingly an object of the invention to solve, eliminate, alleviate, mitigate or reduce at least some of the problems and shortcomings referred to above.

A first aspect of the present invention is a method of causing proximity-dependent activity by a mobile device. The method comprises the following steps.

The mobile device receives a first short-range wireless communication signal from a first transmitter function at or near a physical location when being located within a first distance or distance range from the physical location or first transmitter function.

The mobile device reacts to the received first short-range wireless communication signal by scanning for a second transmitter function at or near the physical location, wherein the transmitter identity of the second transmitter function is indicated by information contained in the first short-range wireless communication signal.

The mobile device then receives a second short-range wireless communication signal from the second transmitter function when being located within a second distance or distance range from the physical location or second transmitter function, the second distance or distance range being shorter than the first distance or distance range.

The mobile device then causes registration of information contained in the second short-range wireless communication signal.

The mobile device then causes resolving of the registered information to determine an associated activity.

The mobile device finally causes performance of the determined activity.

The first and second transmitter functions may, advantageously, be compliant with Bluetooth Low Energy, BLE, or alternatively with other short-range wireless communication technology. By using such short-range wireless communication technology, only a *minimum of manual intervention* will be required from the user of the mobile device.

Also, the combined use of the first and second transmitter functions will be advantageous in terms of *speed.* The first signal from the first transmitter function will serve to prepare the mobile device for things to come, by starting to scan for the second transmitter function. The mobile device will receive the first signal while still being at some distance from the physical location, and when the mobile device moves closer to the physical location, the mobile device will already be scanning for the second transmitter function and therefore be able to react on it quickly.

Moreover, the combined use of the first and second transmitter functions will be advantageous also in terms of *locational accuracy.* Since the first signal from the first transmitter function will enable the mobile device to react quickly to the second signal from the second transmitter function, this also means that will be possible to have a shorter range for the second transmitter function than what would otherwise be needed. Without the first transmitter function to cause scanning for the second transmitter function, the second transmitter function (in effect then being the only transmitter function) would need a longer range to cut down on the reaction speed by allowing the mobile device to receive the signal sooner (i.e., when still being longer from the physical location).

As will be clear from the following description of different exemplifying embodiments, the inventive approach will also be very flexible and useful for many different kinds of activity to be caused, and in many different situations.

A second aspect of the present invention is a mobile computing device comprising a controller, a short-range wireless communication interface, and a long-range broadband communication interface. The controller is configured for performing the functionality defined for the mobile device in the method according to the first aspect of the invention.

A third aspect of the present invention is a communication system comprising one or more mobile computing devices according to the second aspect of the invention, the first transmitter function as defined in the method according to the first aspect of the invention, and the second transmitter function as defined in the method according to the first aspect of the invention.

Other aspects, objectives, features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein.

All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

Figs 1A-1C illustrate how a user of a mobile device may be involved in proximity-based causing of activity.
Fig 2A illustrates a communication system generally according to the present invention, showing that a first transmitter function at or near a physical location sends a first short-range wireless communication signal to cause scanning for a second transmitter function when received by a mobile device being located within a first distance or distance range.
Fig 2B illustrates the communication system of Fig 2A, but now showing that the second transmitter function at or near a physical location sends a second short-range wireless communication signal to be received by the mobile device being located within a second distance or distance range, shorter than the first distance or distance range. The receipt of the second signal causes proximity-dependent activity by the mobile device.
Figs 2C-2F illustrate embodiments of the invention.
Fig 3 is a flowchart diagram of a method of causing proximity-dependent activity by a mobile device, generally according to the present invention.
Fig 4 illustrates a mobile computing device which may implement the mobile device as described in this document.
Figs 5A-5C illustrates data structures and lookup tables used in some embodiments of the present invention.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

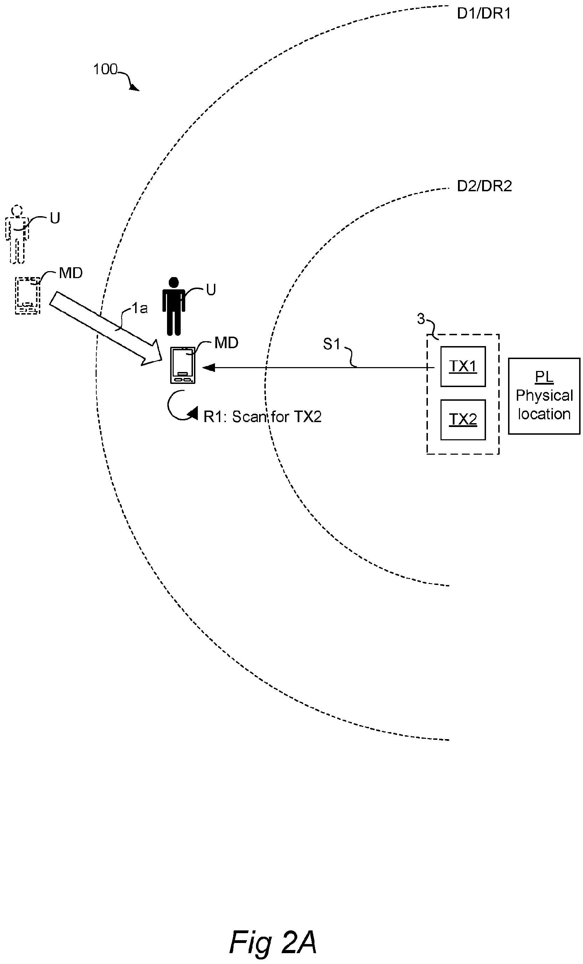

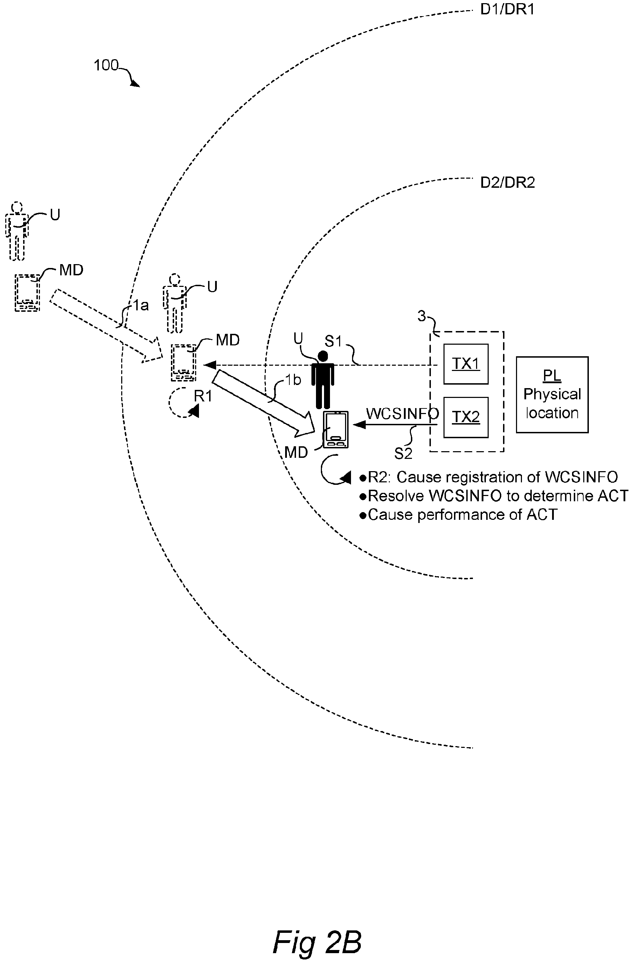

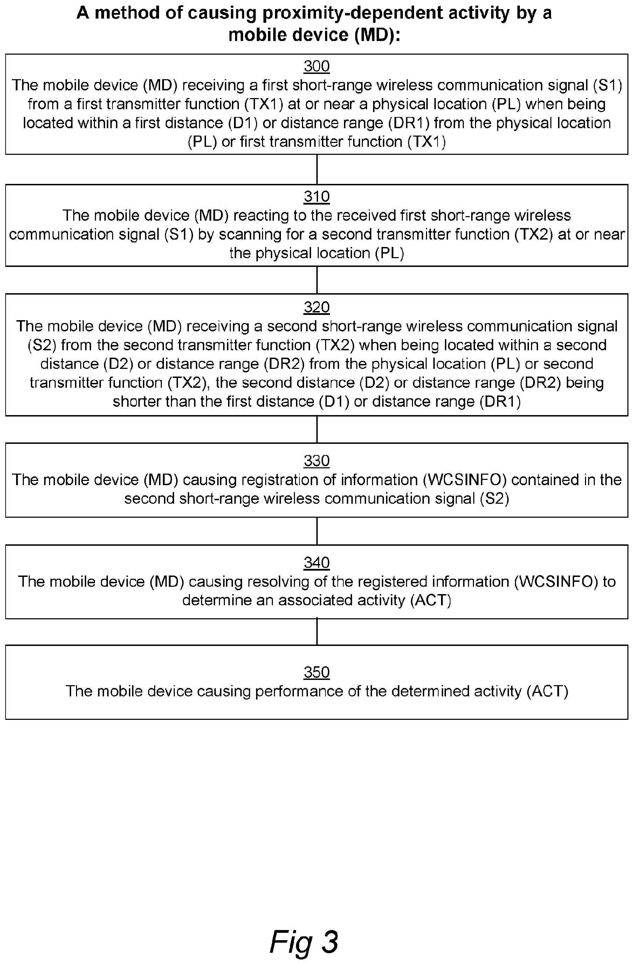

Reference is first made to Fig 2A and Fig 2B which illustrate a communication system 100 generally according to the present invention. A method of causing proximity-dependent activity by a mobile device MD when a user U brings the mobile device MD close to a physical location PL may be performed in the communication system 100. The method is illustrated as a flowchart diagram in Fig 3 and will be described in more detail later.

The physical location PL may, for instance and without limitation, be a retail premise (like a shop, supermarket or mall), an office premise, a residential premise (like a private home or a hotel), an industrial premise (like a factory or plant), an exhibition premise (like a fair, gallery or museum), or an outdoor scenery.

The communication system 100 comprises a first transmitter function TX1 and a second transmitter function TX2, both being provided at or near a physical location PL. In the disclosed embodiment, however without limitation, the first and second transmitter functions TX1, TX2 are compliant with Bluetooth Low Energy, BLE.

The first transmitter function TX1 is configured for sending a first short-range wireless communication signal S1 to cause a first reaction R1 when it is received by the mobile device MD when being located within a first distance D1 or distance range DR1 from the physical location PL or first transmitter function TX1.

The second transmitter function TX2 is configured for sending a second short-range wireless communication signal S2 to cause a second reaction R2 when it is received by the mobile device MD when being located within a second distance D2 or distance range DR2 from the physical location PL or second transmitter function TX2. The second distance D2 or distance range DR2 is shorter than the first distance D1 or distance range DR1. For instance, and subject to the needs and constraints of an actual implementation, the first distance range DR1 may be 1-50 m, or more preferably 2-10 m, without limitation, and the first distance D1 may be a distance within the first distance range DR1. Likewise, the second distance range DR2 may be 5-50 cm, or more preferably 10-30 cm, without limitation, and the second distance D2 may be a distance within the second distance range DR2.

As is illustrated in Fig 2A, when the user U moves 1a the mobile device MD, it will approach the physical location PL. The mobile device MD is configured, when being located within the first distance D 1/distance range DR1 from the physical location PL or first transmitter function TX1, for receiving the first short-range wireless communication signal S1 from the first transmitter function TX1. This is seen in step 300 in Fig 3.

The mobile device MD is configured for reacting R1 to the receiving of the first short-range wireless communication signal S1 by scanning for the second transmitter function TX2. This is seen in step 310 in Fig 3. Accordingly, the first short-range wireless communication signal S1 may contain some information which allows the mobile device MD to know what second transmitter function TX2 to scan for. In some embodiments, the first short-range wireless communication signal S1 contains a transmitter identity of the second transmitter function TX2.

As is illustrated in Fig 2B, when the user U continues to move 1b the mobile device MD, it will come closer to the physical location PL. The mobile device MD is configured for receiving the second short-range wireless communication signal S2 from the second transmitter function TX2 when being located within the second distance D2 or distance range DR2 from the physical location PL or second transmitter function TX2. As already explained, the second distance D2 or distance range DR2 is shorter than the first distance D1 or distance range DR1. This is seen in step 320 in Fig 3.

The mobile device MD is configured for reacting R2 to the receiving of the second short-range wireless communication signal S2 by causing registration of information WCSINFO contained in the second short-range wireless communication signal S2. This is seen in step 330 in Fig 3.

The mobile device MD is also configured to cause resolving of the registered information WCSINFO to determine an associated activity ACT. This is seen in step 340 in Fig 3. This step may occur automatically after performance of step 330, or alternatively at a later stage, for instance upon request by the user U of the mobile device MD by invoking a resolving command in a software application in the mobile device MD.

Finally, the mobile device MD is configured to cause performance of the determined activity ACT. This is seen in step 350 in Fig 3. This step may occur automatically after performance of step 340, or alternatively at a later stage, for instance upon request by the user U of the mobile device MD by invoking an activity launch command in a software application in the mobile device MD.

The activities in steps 330-350 in Fig 3 may be implemented in different ways. Some embodiments will now be described with reference to the remaining drawings.

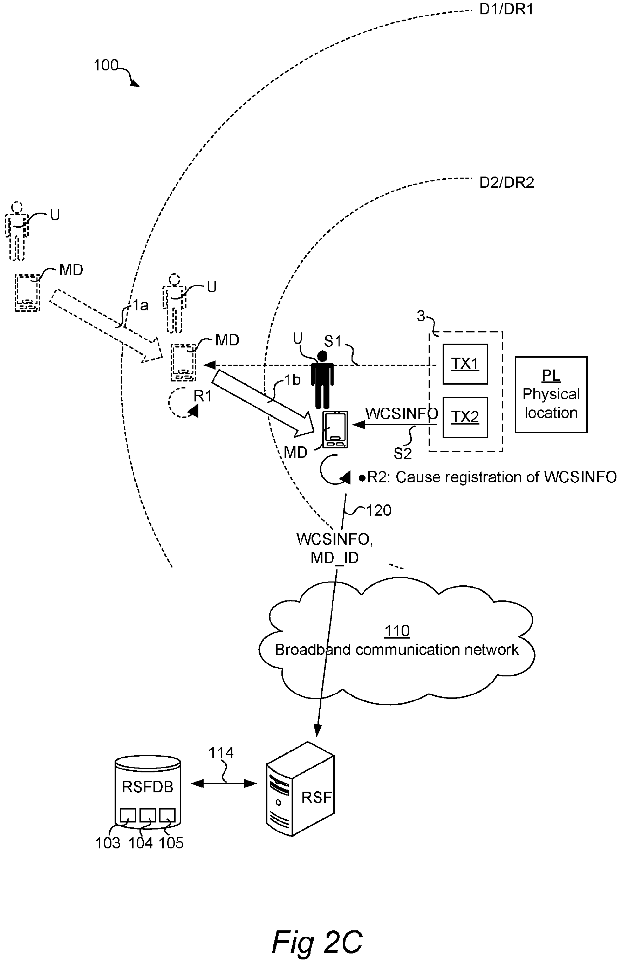

In one or more embodiments, the communication system 100 comprises a remote server function RSF. The remote server function has access to an associated storage RSFDB, as seen at 114 in Fig 2C. In such embodiments, the mobile device MD may be configured to cause the registration of the information WCSINFO contained in the second short-range wireless communication signal S2 (i.e., step 330 in Fig 3) by communicating 120 the information WCSINFO over a broadband communication network 110 to cause storing of the information WCSINFO in a data structure 103 in the storage RSFDB associated with the remote server function RSF. With the communication 120 of the information WCSINFO, the mobile device MD also communicates an identity MD_ID thereof, as can also be seen in Fig 2C.

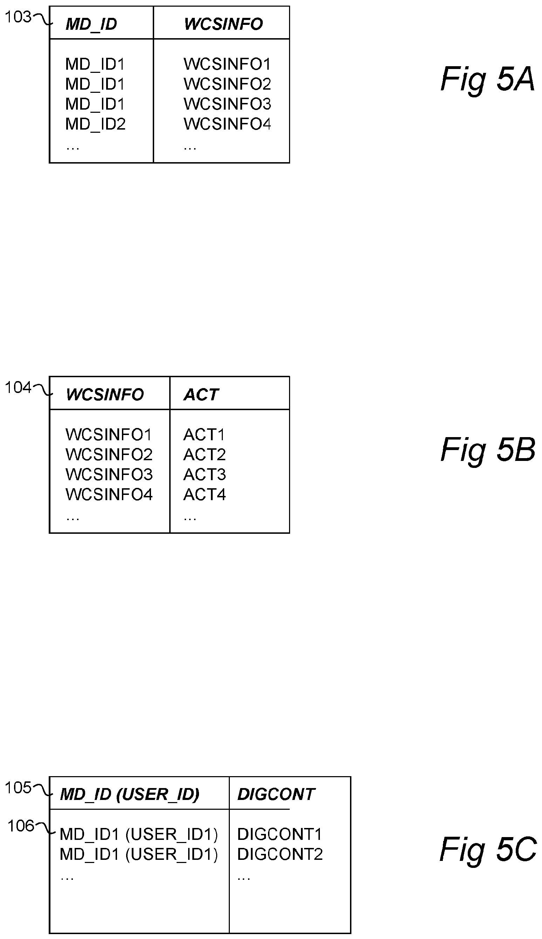

An exemplary content of the data structure 103 is shown in Fig 5A. As can be seen, the mobile device MD having an MD_ID=MD_ID1 has caused storing of information WCSINFO=WCSINFO1 in the data structure 103 in the storage RSFDB. The same mobile device MD has also caused storing of information WCSINFO= WCSINFO2 as well as information WCSINFO= WCSINFO3 in the data structure 103. WCSINFO=WCSINFO1, WCSINFO2, WCSINFO3 may be the result of the mobile device MD (with MD_ID=MD_ID1) having visited three different physical locations PL=PL1, PL2, PL3 and thus having received and registered three different signals S2 from three different transmitter functions TX2. The exemplary data structure 103 in Fig 5A also contains a record showing that another mobile device having an MD_ID=MD_ID2 has caused storing of information WCSINFO=WCSINFO4 in the storage RSFDB.

As can be understood from the above, in addition to causing registration of first information WCSINFO1 when the mobile device MD is near a first physical location PL1, the mobile device MD may also cause registration of second information WCSINFO2 when the mobile device MD is near a second physical location PL2, different from the first physical location PL1. After having caused registration of the second information WCSINFO2, the mobile device MD may cause resolving of the registered first information WCSINFO1 as well as of the registered second information WCSINFO2 to determine an associated first activity (ACT1) and an associated second activity (ACT2), respectively.

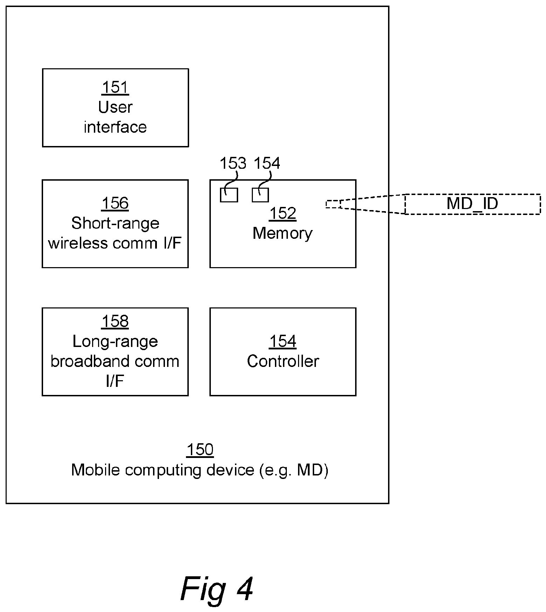

In alternative embodiments, the mobile device MD may instead be configured to cause the registration of the information WCSINFO contained in the second short-range wireless communication signal S2 (i.e., step 330 in Fig 3) by storing the information WCSINFO in a data structure 153 in local memory 152 of the mobile device MD (see Fig 4).

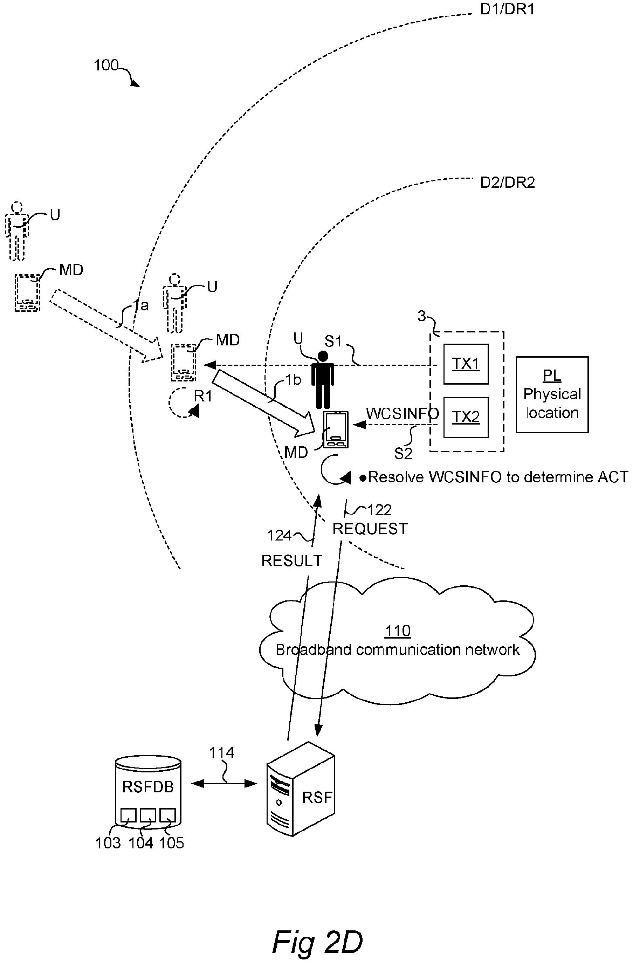

In embodiments comprising the remote server function RSF, the mobile device MD may be configured to cause the resolving of the registered information WCSINFO (i.e., step 340 in Fig 3) by requesting 122, over the broadband communication network 110, the remote server function RSF to match the registered information WCSINFO (as either stored in the data structure 103 in the storage RSFDB, or stored locally at 153 in the mobile device MD) against a lookup-table 104 in the storage RSFDB. This can be seen in Fig 2D.

An exemplary content of the lookup table 104 is shown in Fig 5B. As can be seen, different activities ACT=ACT1, ACT2, ACT3, ACT4 are mapped to different values of the registered information WCSINFO=WCSINFO1, WCSINFO2, WCSINFO3, WCSINFO4.

The mobile device MD is also configured for receiving 124, over the broadband communication network 110, result information RESULT about a resulting match in the lookup-table 104, and for determining the associated activity ACT from the received result information RESULT.

In alternative embodiments, the mobile device MD may instead be configured to cause the resolving of the registered information WCSINFO (i.e., step 340 in Fig 3) by matching the registered information WCSINFO against a lookup-table 154 in local memory 152 of the mobile device MD and determining the associated activity ACT from a resulting match in the lookup-table 154.

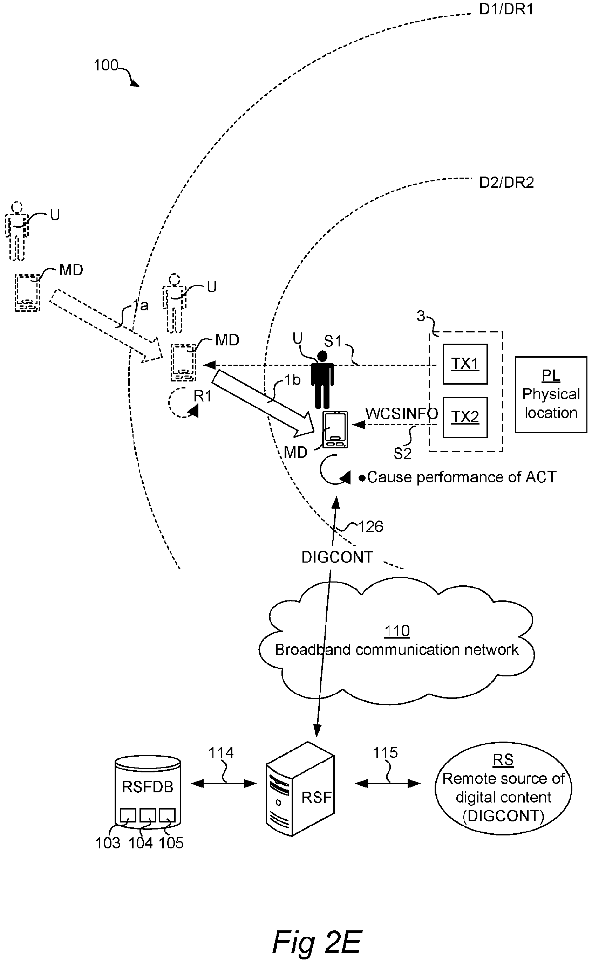

In some embodiments, the determined activity ACT pertains to retrieval 126, over the broadband communication network 110, of digital content DIGCONT from a remote server function RSF to the mobile device MD. This can be seen in Fig 2E. The digital content DIGCONT may originate from a remote source RS, from which the remote server function RSF may fetch it, as seen at 115 in Fig 2E.

Advantageously, the retrieved digital content DIGCONT may be presented in a user interface 151 of the mobile device MD, see Fig 4. This may be beneficial if, for instance, the retrieved digital content DIGCONT represents test reports, fact sheets, culinary recipes or nutritional information which may be useful to the user U when the physical location PL is in a shop, supermarket or mall.

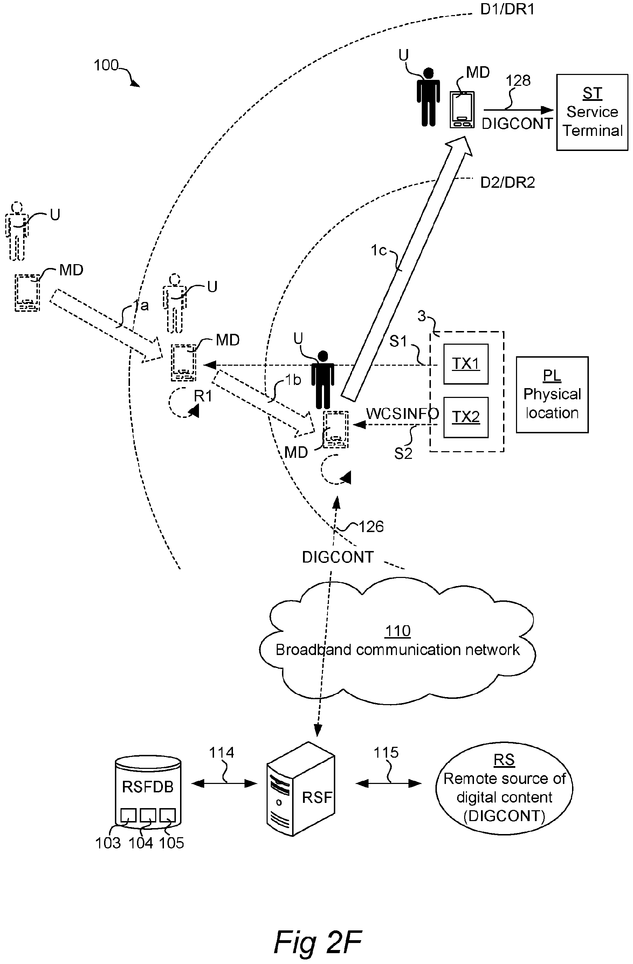

Alternatively or additionally, the retrieved digital content DIGCONT may be transmitted 128 by short-range wireless communication to a service terminal ST. As seen in Fig 2F, this may be beneficial if, for instance, the retrieved digital content DIGCONT represents a discount coupon when the physical location PL is in a shop, supermarket or mall. After having obtained the digital content DIGCONT by presenting the mobile device MD at the physical location PL as shown in Figs 2C-2E, the user U may continue 1c to a service terminal ST at another physical location, and redeem the discount by transmitting the digital content DIGCONT to the service terminal ST.

In some embodiments, the determined activity ACT pertains to retrieval, over the broadband communication network 110, of digital content DIGCONT from the remote source RS to the remote server function RSF. The remote server function RSF will store the retrieved digital content DIGCONT in a data structure 105 in the storage RSFDB associated with the remote server function (RSF), together with information 106 linking the stored digital content DIGCONT to the mobile device MD or the user U thereof. As can be seen in the example of Fig 5C, the data structure 105 may, for instance, keep record of digital content DIGCONT1 and DIGCONT2 linked to the mobile device MD having MD_ID= MD_ID1 (or the user U having USER_ID= USER ID1).

In this way, the user U may build a collection of digital content, which has been retrieved in accordance with the functionality described above with reference to Figs 2C-2D, possibly by visiting different physical locations. The collection of digital content stored in the data structure 105 may then be accessed at any time by the user U. If, for instance, the collection of digital content represents different discount coupons collected by the user U during a walk in a shop, supermarket or mall, the user may then ultimately access the collection of digital content from the remote server function RSF when appearing at a checkout counter (e.g. service terminal ST), and either present the coupons in the user interface 151 of the mobile device MD to show a shop assistant, or transmit the coupons digitally to the checkout counter (e.g. service terminal ST) by for instance short-range wireless data communication or long-range broadband communication.

In some embodiments, the mobile device MD causes performance of the determined activity ACT by requesting, over the broadband communication network 110, the remote server function RSF to execute a predefined function. One example of such a predefined function is the placing of an order for a goods or service.

In alternative embodiments, the mobile device MD causes performance of the determined activity ACT by executing a predefined function in the mobile device MD. One example of such a function is the execution of a protected software application (or protected functionality therein), normally not accessible to the user U. Another example is the playback of prestored digital content in the mobile device MD which has hitherto not been accessible or known to the user U.

In one advantageous embodiment, the physical location PL is in or at a residential premise. A television device, such as a set-up box, cable TV receiver, Internet TV or smart TV, is provided at the physical location PL, in addition to the first and second transmitter functions TX1, TX2. The mobile device MD is configured for receiving current television channel information from the television device. The mobile device MD is moreover configured for registering a current time of day. The mobile device MD causes the registration of the information WCSINFO contained in the second short-range wireless communication signal S2 by communicating said information WCSINFO together with the received current television channel information and the registered current time of day over the broadband communication network 110 to the remote server function RSF. As result, the user U may receive product offerings tailored to the TV contents of the registered current television channel as shown exactly at the registered current time of day. Alternatively or additionally, a TV operator may use the registered information for statistical purposes.

In some embodiments, at least one of the first short-range wireless communication signal S1 and second short-range wireless communication signal S2 is a Bluetooth Low Energy signal. In some embodiments, at least one of the first short-range wireless communication signal S1 and second short-range wireless communication signal S2 is a beacon advertisement signal, as referred to at the end of the detailed description section of this document.

Particularly in such embodiments, the first reaction R1 may comprise switching from a first mode in which the mobile device MD performs monitoring of short-range wireless communication signals to a second mode in which the mobile device MD performs ranging of short-range wireless communication signals. For a brief description of monitoring and ranging, reference is made to the end of the detailed description section of this document.

When in the second mode of performing ranging, the mobile device MD may be configured to determine from the received second short-range wireless communication signal S2 that the mobile device MD is located within the second distance D2 or distance range DR2 from the physical location PL or second transmitter function TX2, and accordingly react R2. In some embodiments, the mobile device MD may start receiving the second short-range wireless communication signal S2 already before the mobile device MD is within the second distance D2 or distance range DR2, then establish communication with the second transmitter function TX2 and range on the second short-range wireless communication signal S2 to decide when the mobile device MD has come within the second distance D2 or distance range DR2.

An improvement in reaction speed is obtained by using the first short-range wireless communication signal S1 (having a longer range) to cause the mobile device MD to enter the ranging mode as preparation of the receipt of and reaction to the second short-range wireless communication signal S2 (having a shorter range).

The remote server function RSF may, for instance, be a server computer, a cluster of such computer devices, or a cloud computing resource or service. It has a processing unit in the form of, for instance, one or more CPUs and/or DSPs, and is programmed to perform its functionality as described in this document by the processing unit executing program instructions of a computer program. The storage RSFDB may, for instance, be a database included in or external to the server computing device. The broadband communication network 110 may, for instance, be a mobile communications network compliant with, for instance, WCDMA, HSPA, GSM, UTRAN, UMTS, LTE or LTE, and the broadband data communication may, for instance, be TCP/IP traffic, possibly encrypted or otherwise secured.

Figure 4 illustrates a mobile computing device 150 which may implement the mobile device MD. The mobile computing device 150 comprises a user interface 151, typically comprising a presentation device and an input device (possibly combined). The mobile computing device 150 also comprises a memory 152 for storing an identity (such as the aforementioned MD_ID) associated with the mobile computing device 150 (e.g. MD). The mobile computing device 150 also comprises a controller 154, a short-range wireless communication interface 156, and a long-range broadband communication interface 158. The controller 154 may be configured for performing the functionality defined for the mobile device MD in the communication system 100 as described herein.

The mobile computing device 150 may, for instance, be a mobile phone, tablet computer, personal digital assistant, smart glasses, smart watch or smart bracelet. The controller 154 may be a processing unit in the form of, for instance, one or more microcontrollers, CPUs and/or DSPs, being programmed to perform its functionality as described in this document by the processing unit executing program instructions of a computer program. To this end, the mobile computing device 150 may have computer program code for an app, or similar program, stored in the memory 152 and executable by the controller 154 to perform the functionality of the mobile device MD. Alternatively, the controller 154 may be implemented as an FPGA, ASIC, etc.

Copies of identity information for the first and/or second transmitter functions TX1, TX2 of the service terminal ST may be stored in the memory 152 of the mobile computing device 150, to facilitate detection (e.g. monitoring, ranging) of the first and/or second signals S1, S2.

In some embodiments, the first and second transmitter functions TX1, TX2 in or at the physical location PL are configured for sending the first and second short-range wireless communication signals S1, S2 at respective defined periodicities. These periodicities may be the same or different.

In some embodiments, the first and second transmitter functions TX1, TX2 in or at the physical location PL are configured for sending the first and second short-range wireless communication signals S1, S2 at respective transmission power levels, the transmission power level of the first short-range wireless communication signal S1 being higher than the transmission power level of the second short-range wireless communication signal S2. In this way, the first distance D1/distance range DR1 is made farther than the second distance D2/distance range DR2.

In some embodiments, the first and second transmitter functions TX1, TX2 in or at the physical location PL are configured for sending the first and second short-range wireless communication signals S1, S2 with respective and different radio signals propagation profiles. For instance, one of the radio signals propagation profiles may be more or less omni-directional, whereas the other of the radio signals propagation profiles may have a narrower directional coverage. This may be advantageous since it may reduce the risk of activating other signal receivers than the intended mobile device MD.

In some embodiments, one or both of the first and second transmitter functions TX1, TX2 is/are separate transmitter device(s) being positioned external to but physically near the physical location PL. Physically near may include one or both of the transmitter devices being mounted at ceiling level or floor level.

In some embodiments, one or both of the first and second transmitter functions TX1, TX2 are implemented by short-range wireless communication circuitry comprised in a communication device 3 (see Figs 2A-2F).

In some embodiments, two logical transmitter functions TX1, TX2 may be implemented by one single physical communication device 3.

One or both of the first and second transmitter functions TX1, TX2 may be part of a transceiver function, i.e. they may also have a receiver function.

Even though Bluetooth Low Energy, BLE, is presently considered an advantageous short-range wireless communication technology for the first and second transmitter functions TX1, TX2, other technologies are also conceivable, including but not limited to near-field communication (NFC), radio frequency identification (RFID), wireless LAN (WLAN, WiFi), or another form of proximity-based device-to-device radio communication signal such as LTE Direct.

For embodiments which are indeed based on BLE, the following summary of BLE and beacon technology based on BLE is believed to facilitate the understanding of some embodiments of the present invention.

The iBeacon technology from Apple allows for mobile devices to understand their location on a micro-local scale, and also allows delivery of hyper-contextual content to the users of mobile devices based on their current location. The iBeacon technology is based on the BLE standard, and more particularly on Generic Access Profile (GAP) advertising packets. There are several other kinds of short-range wireless beacon technologies, for instance AltBeacon, URIBeacon and Eddystone, which are also based on BLE and GAP.

In a basic short-range wireless beacon communication system based on the BLE standard, a beacon transmitter device repeatedly broadcasts a short-range wireless beacon advertisement signal in a 31-byte GAP BLE packet. The beacon advertisement signal contains a 128-bit universally unique identifier, UUID. The beacon advertisement signal may also include a 16-bit major portion and a 16-bit minor portion. The beacon signal identifies a beacon region associated with the beacon transmitter device. Whereas, as is commonly known, a geographical region is an area defined by a circle of a specified radius around a known point on the Earth's surface, a beacon region is in contrast an area defined by a mobile device's proximity to one or more beacon transmitter devices.

In some implementations, the beacon region is represented by the UUID, the major portion and the minor portion in the beacon advertisement signal. In other implementations, the beacon region is represented by the UUID and the major or minor portion in the beacon signal. In still other implementations, the beacon region is represented by the UUID alone.

To be able to receive the short-range wireless beacon signal when being within range of a beacon transmitter device, each mobile device is provided with an application program, app, which is configured to detect and react on short-range wireless beacon signals, such as the aforementioned beacon advertisement signal, with support from the underlying operating system. In one known beacon technology, the apps in mobile devices can detect and react on beacons in two ways, *monitoring* and *ranging.* Monitoring enables the app to detect movement in and out of the beacon region (i.e., whether the mobile device is within or outside of the range of any of the beacon transmitter devices with which the beacon region is associated). Hence, monitoring allows the app to scan for beacon regions. Ranging is more granular and provides a list of beacon transmitter devices in range, together with their respective received signal strength, which may be used to estimate a distance to each of them. Hence, ranging allows the app to detect and react on individual beacon transmitter devices in a beacon region.

These apps may be handled by the operating system of the mobile device in different modes. The most prominent mode is the *active mode*, in which the app executes in the foreground and is typically capable of interacting with the user of the mobile device and also to communicate with an external device such as a server via the short-range wireless beacon interface and/or another communication interface. As regards short-range wireless beacon communication, ranging typically only works when the app is in active mode.

When a mobile device receives the beacon advertisement signal, the app in the mobile device may detect that it has entered the beacon region from the UUID (and the major/minor as the case may be) contained in the beacon advertisement signal, and react as appropriate in some way which is beneficial to the user and/or the host of the beacon transmitter device and which often involves interaction between the app in the mobile device and a service provider over a broadband communication network. A system server may also be included in some implementations.

Examples of such beneficial use include, without limitation, determining a current approximate position of the mobile device by retrieving a predefined position of the beacon transmitter device from the service provider or by cross reference with local lookup data, or retrieving content from the service provider.

A mobile device where the app is in active mode is referred to as an *active mobile device* in this document. An active mobile device may receive and react to additional transmissions of the beacon advertisement signal from the beacon transmitter device; this may be useful for instance if the content associated with the host of the beacon transmitter device is updated or changed.

Furthermore, an active mobile device may receive and react to beacon advertisement signals from other beacon transmitter devices nearby, provided of course that they are within range of the respective beacon transmitter device, or move closer to it. This is so irrespective of whether the different beacon transmitter devices advertise the same beacon region (i.e. contain the same UUID and major/minor in the respective beacon advertisement signals), or different beacon regions (provided that the app is configured to monitor for such different beacon regions). It is to be noticed that the same beacon region (e.g. same UUID) is very often used for different beacon transmitter devices hosted by the same host, such as within the same supermarket, arena, fastfood restaurant, etc.

The operating system of the mobile devices may also handle apps in a *passive mode.* A purpose of the passive mode is power preservation, since the mobile devices are typically powered by batteries and since it is a general technical ambition to maximize the operational time of a mobile device between successive charging sessions. In the passive mode, the app executes in the background or is only installed on the mobile device. Monitoring works when the app is in active mode as well as when the app is in passive mode, whereas ranging may only work when the app is in active mode, or may only work for a limited time period when the app is in passive mode.

Transitions between active mode and passive mode may be based on user interaction, user preference settings in the app or the operating system, or program logic in the app or the operating system.

A mobile device where the app is in passive mode is referred to as a *passive mobile device* in this document. In the passive mode, the app typically cannot interact with the user via the user interface, nor communicate with a server or another device - except for the following. Just like active mobile devices, a nearby passive mobile device may monitor for a beacon region and hence receive a short-range wireless beacon advertisement signal if it is within range of the beacon transmitter device in question. However, unlike active mobile devices, the passive mobile device will not be able to use ranging functionality to estimate a distance to the beacon transmitter device.

In some embodiments, the first signal S 1 from the first transmitter function TX1 serves to cause the mobile device MD to switch from passive mode to active mode, thereby allowing efficient scanning for the second transmitter function TX2 and quick detection and handling of the second signal S2.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method of causing proximity-dependent activity by a mobile device (MD), the method comprising the steps of:
the mobile device (MD) receiving (300) a first short-range wireless communication signal (S1) from a first transmitter function (TX1) at or near a physical location (PL) when being located within a first distance (D1) or distance range (DR1) from the physical location (PL) or first transmitter function (TX1);
the mobile device (MD) reacting (310) to the received first short-range wireless communication signal (S1) by scanning for a second transmitter function (TX2) at or near the physical location (PL), the transmitter identity of the second transmitter function (TX2) being indicated by information contained in the first short-range wireless communication signal (S1);
the mobile device (MD) receiving (320) a second short-range wireless communication signal (S2) from the second transmitter function (TX2) when being located within a second distance (D2) or distance range (DR2) from the physical location (PL) or second transmitter function (TX2), the second distance (D2) or distance range (DR2) being shorter than the first distance (D1) or distance range (DR1);
the mobile device (MD) causing (330) registration of information (WCSINFO) contained in the second short-range wireless communication signal (S2);
the mobile device (MD) causing (340) resolving of the registered information (WCSINFO) to determine an associated activity (ACT); and
the mobile device causing (350) performance of the determined activity (ACT).

2. The method as defined in claim 1, wherein the mobile device (MD) causes (330) the registration of the information (WCSINFO) contained in the second short-range wireless communication signal (S2) by storing the information (WCSINFO) in a data structure (153) in local memory (152) of the mobile device (MD).

3. The method as defined in claim 1, wherein the mobile device (MD) causes (330) the registration of the information (WCSINFO) contained in the second short-range wireless communication signal (S2) by communicating (120) the information (WCSINFO) over a broadband communication network (110) to cause storing of the information (WCSINFO) in a data structure (103) in a storage (RSFDB) associated with a remote server function (RSF).

4. The method as defined in any preceding claim, wherein the mobile device (MD) causes the resolving (355) of the registered information (WCSINFO) by matching the registered information (WCSINFO) against a lookup-table (154) in local memory (152) of the mobile device (MD) and determining the associated activity (ACT) from a resulting match in the lookup-table (154).

5. The method as defined in any preceding claim, wherein the mobile device (MD) causes the resolving (340) of the registered information (WCSINFO) by:
requesting (122), over a broadband communication network (110), a remote server function (RSF) to match the registered information (WCSINFO) against a lookup-table (104) in a storage (RSFDB) associated with a remote server function (RSF);
receiving (124), over the broadband communication network (110), result information (RESULT) about a resulting match in the lookup-table (104); and
determining the associated activity (ACT) from the received result information (RESULT).

6. The method as defined in any preceding claim, wherein the determined activity (ACT) pertains to retrieval, over a broadband communication network (110), of digital content (DIGCONT) from a remote server function (RSF) to the mobile device (MD).

7. The method as defined in claim 6, further comprising presenting the retrieved digital content (DIGCONT) in a user interface (151) of the mobile device (MD).

8. The method as defined in claim 6 or 7, further comprising transmitting (128), by short-range wireless communication, the retrieved digital content (DIGCONT) to a service terminal (ST).

9. The method as defined in any of claims 1-5, wherein the determined activity (ACT) pertains to retrieval, over a broadband communication network (110), of digital content (DIGCONT) from a remote source (RS) to a remote server function (RSF), the remote server function (RSF) storing the retrieved digital content (DIGCONT) in a data structure (105) in a storage (RSFDB) associated with the remote server function (RSF), together with information (106) linking the stored digital content (DIGCONT) to the mobile device (MD) or a user (U) thereof.

10. The method as defined in any preceding claim, wherein the mobile device (MD) causes performance of the determined activity (ACT) by executing a predefined function in the mobile device (MD).

11. The method as defined in any preceding claim, wherein the mobile device (MD) causes performance of the determined activity (ACT) by requesting, over a broadband communication network (110), a remote server function (RSF) to execute a predefined function.

12. The method as defined in claim 11, wherein the predefined function executed by the remote server function (RSF) is the placing of an order for a goods or service.

13. The method as defined in any preceding claim,
wherein the mobile device (MD) causes registration of first information (WCSINFO1) when the mobile device (MD) is near a first physical location (PL1);
wherein the mobile device (MD) also causes registration of second information (WCSINFO2) when the mobile device (MD) is near a second physical location (PL2), different from the first physical location (PL1); and
wherein, after having caused registration of the second information (WCSINFO2), the mobile device (MD) causes resolving of the registered first information (WCSINFO1) as well as of the registered second information (WCSINFO2) to determine an associated first activity (ACT1) and an associated second activity (ACT2), respectively.

14. The method as defined in any preceding claim, wherein the physical location is in or at one of:
a retail premise,
an office premise,
a residential premise,
an industrial premise,
an exhibition premise, or
an outdoor scenery.

15. The method as defined in claim 14, wherein the physical location is in or at a residential premise, the method further involving:
the mobile device (MD) receiving current television channel information from a television device;
the mobile device (MD) registering a current time of day; and
the mobile device (MD) causing (340) the registration (345) of the information (WCSINFO) contained in the second short-range wireless communication signal (S2) by communicating said information (WCSINFO) together with the received current television channel information and the registered current time of day over a broadband communication network (110) to a remote server function (RSF).

16. A mobile computing device (150) comprising:
a controller (154);
a short-range wireless communication interface (156); and
a long-range broadband communication interface (158),
wherein the controller (154) is configured for performing the functionality defined for the mobile device (MD) in the method according to any of claims 1-15.

17. A communication system (100) comprising:
one or more mobile computing devices (150) as defined in claim 16;
the first transmitter function (TX1) as defined in the method according to any of claims 1-15; and
the second transmitter function (TX2) as defined in the method according to any of claims 1-15.

18. The communication system (100) as defined in claim 17, wherein the first and second transmitter functions (TX1, TX2) are compliant with Bluetooth Low Energy, BLE.

## Patentansprüche

1. Verfahren zum Auslösen einer näherungsabhängigen Aktivität durch eine mobile Vorrichtung (MD), wobei das Verfahren die folgenden Schritte aufweist:
die mobile Vorrichtung (MD) empfängt (300) ein erstes drahtloses Kurzstrecken-Kommunikationssignal (S1) von einer ersten Sendefunktion (TX1) an oder nahe einer physischen Stelle (PL), wenn sie innerhalb eines ersten Abstands (D1) oder Entfernungsbereichs (DR1) von der physischen Stelle (PL) oder der ersten Sendefunktion (TX1) angeordnet ist;
die mobile Vorrichtung (MD) reagiert (310) auf das empfangene erste drahtlose Kurzstrecken-Kommunikationssignal (S1), indem sie nach einer zweiten Sendefunktion (TX2) an oder nahe der physischen Stelle (PL) abtastet, wobei die Senderidentität der zweiten Sendefunktion (TX2) durch Informationen angezeigt wird, die in dem ersten drahtlosen Kurzstrecken-Kommunikationssignal (S1) enthalten sind;
die mobile Vorrichtung (MD) empfängt (320) ein zweites drahtloses Kurzstrecken-Kommunikationssignal (S2) von der zweiten Sendefunktion (TX2), wenn sie innerhalb eines zweiten Abstands (D2) oder Entfernungsbereichs (DR2) von der physischen Stelle (PL) oder der zweiten Sendefunktion (TX2) angeordnet ist, wobei die zweite Entfernung (D2) oder der zweite Entfernungsbereich (DR2) kürzer als die erste Entfernung (Dl) oder der erste Entfernungsbereich (DR1) ist;
die mobile Vorrichtung (MD) veranlasst (330) eine Registrierung von Informationen (WCSINFO), die in dem zweiten drahtlosen Kurzstrecken-Kommunikationssignal (S2) enthalten sind;
die mobile Vorrichtung (MD) veranlasst (340) eine Auflösung der registrierten Informationen (WCSINFO), um eine zugeordnete Aktivität (ACT) zu bestimmen; und
die mobile Vorrichtung veranlasst (350) eine Ausführung der bestimmten Aktivität (ACT).

2. Verfahren nach Anspruch 1, wobei die mobile Vorrichtung (MD) die Registrierung der Informationen (WCSINFO), die in dem zweiten drahtlosen Kurzstrecken-Kommunikationssignal (S2) enthalten sind, veranlasst (330), indem sie die Informationen (WCSINFO) in einer Datenstruktur (153) im lokalen Speicher (152) der mobilen Vorrichtung (MD) speichert.

3. Verfahren nach Anspruch 1, wobei die mobile Vorrichtung (MD) die Registrierung der Informationen (WCSINFO), die in dem zweiten drahtlosen Kurzstrecken-Kommunikationssignal (S2) enthalten sind, veranlasst (330), in dem sie die Informationen (WCSINFO) über ein Breitband-Kommunikationsnetzwerk (110) übermittelt (120), um ein Speichern der Informationen (WCSINFO) in einer Datenstruktur (103) in einem Speicher (RSFDB) zu veranlassen, der einer Remote-Server-Funktion (RSF) zugeordnet ist.

4. Verfahren nach einem der vorhergehenden Ansprüche, wobei die mobile Vorrichtung (MD) die Auflösung (355) der registrierten Informationen (WCSINFO) veranlasst, indem sie die registrierten Informationen (WCSINFO) mit einer Nachschlagetabelle (154) im lokalen Speicher (152) der mobilen Vorrichtung (MD) abgleicht und die zugeordnete Aktivität (ACT) aus einer resultierenden Übereinstimmung in der Nachschlagetabelle (154) bestimmt.

5. Verfahren nach einem der vorhergehenden Ansprüche, wobei die mobile Vorrichtung (MD) die Auflösung (340) der registrierten Informationen (WCSINFO) veranlasst durch:
Anfordern (122), über ein Breitband-Kommunikationsnetzwerk (110), einer Remote-Server-Funktion (RSF), die registrierten Informationen (WCSINFO) mit einer Nachschlagetabelle (104) in einem Speicher (RSFDB), der einer Remote-Server-Funktion (RSF) zugeordnet ist, abzugleichen;
Empfangen (124), über das Breitband-Kommunikationsnetzwerk (110), von Ergebnisinformationen (RESULT) über eine resultierende Übereinstimmung in der Nachschlagetabelle (104); und
Bestimmen der zugeordneten Aktivität (ACT) aus den empfangenen Ergebnisinformationen (RESULT).

6. Verfahren nach einem der vorhergehenden Ansprüche, wobei sich die bestimmte Aktivität (ACT) auf einen Abruf eines digitalen Inhalts (DIGCONT) von einer Remote-Server-Funktion (RSF) zu der mobilen Vorrichtung (MD) über ein Breitband-Kommunikationsnetzwerk (110) bezieht.

7. Das Verfahren nach Anspruch 6, ferner aufweisend Darstellen des abgerufenen digitalen Inhalts (DIGCONT) in einem User Interface (151) der mobilen Vorrichtung (MD).

8. Verfahren nach Anspruch 6 oder 7, ferner aufweisend Übertragen (128) des abgerufenen digitalen Inhalts (DIGCONT) durch drahtlose Kurzstrecken-Kommunikation an einen Service Terminal (ST).

9. Verfahren nach einem der Ansprüche 1-5, wobei sich die bestimmte Aktivität (ACT) auf einen Abruf eines digitalen Inhalts (DIGCONT) von einer entfernten Source (RS) zu einer Remote-Server-Funktion (RSF) über ein Breitband- Kommunikationsnetzwerk (110) bezieht, wobei die Remote-Server-Funktion (RSF) den abgerufenen digitalen Inhalt (DIGCONT) in einer Datenstruktur (105) in einem der Remote-Server-Funktion (RSF) zugeordneten Speicher (RSFDB) speichert, zusammen mit Informationen (106), die den gespeicherten digitalen Inhalt (DIGCONT) mit der mobilen Vorrichtung (MD) oder einem Benutzer (U) davon verlinken.

10. Verfahren nach einem der vorhergehenden Ansprüche, wobei die mobile Vorrichtung (MD) ein Ausführen der bestimmten Aktivität (ACT) veranlasst, indem sie eine vordefinierte Funktion in der mobilen Vorrichtung (MD) ausführt.

11. Verfahren nach einem der vorhergehenden Ansprüche, wobei die mobile Vorrichtung (MD) ein Ausführen der bestimmten Aktivität (ACT) veranlasst, indem sie über ein Breitband-Kommunikationsnetz (110) eine Remote-Server-Funktion (RSF) anfordert, eine vordefinierte Funktion auszuführen.

12. Verfahren nach Anspruch 11, wobei die vordefinierte Funktion, die von der Remote-Server-Funktion (RSF) ausgeführt wird, die Aufgabe einer Bestellung für eine Ware oder Dienstleistung ist.

13. Verfahren nach einem der vorangehenden Ansprüche,
wobei die mobile Vorrichtung (MD) die Registrierung einer ersten Information (WCSINFO1) bewirkt, wenn sich die mobile Vorrichtung (MD) nahe einer ersten physischen Stelle (PL1) befindet,
wobei die mobile Vorrichtung (MD) auch die Registrierung einer zweiten Information (WCSINF02) bewirkt, wenn sich die mobile Vorrichtung (MD) nahe einer zweiten physischen Stelle (PL2) befindet, die sich von der ersten physischen Stelle (PL1) unterscheidet; und
wobei, nachdem die Registrierung der zweiten Information (WCSINF02) veranlasst wurde, die mobile Vorrichtung (MD) ein Auflösen der registrierten ersten Information (WCSINFO1) sowie der registrierten zweiten Information (WCSINF02) veranlasst, um eine zugeordnete erste Aktivität (ACT1) bzw. eine zugeordnete zweite Aktivität (ACT2) zu bestimmen.

14. Verfahren nach einem der vorhergehenden Ansprüche, wobei die physische Stelle in oder an einem der folgenden Orte angeordnet ist:
ein Einzelhandelsgeschäft,
ein Büroraum,
ein Wohngebäude,
einen Industriestandort,
eine Ausstellungsfläche oder
eine Außenkulisse.

15. Verfahren nach Anspruch 14, wobei die physische Stelle in oder an einem Wohngebäude angeordnet ist und das Verfahren ferner umfasst:
die mobile Vorrichtung (MD) empfängt aktuelle Fernsehkanalinformationen von einer Fernsehvorrichtung;
die mobile Vorrichtung (MD) registriert eine aktuelle Tageszeit; und
die mobile Vorrichtung (MD) veranlasst (340) die Registrierung (345) der Informationen (WCSINFO), die in dem zweiten drahtlosen Kurzstrecken-Kommunikationssignal (S2) enthalten sind, indem sie die Informationen (WCSINFO) zusammen mit den empfangenen aktuellen Fernsehkanalinformationen und der registrierten aktuellen Tageszeit über ein Breitband- Kommunikationsnetzwerk (110) an eine Remote-Server-Funktion (RSF) übermittelt.

16. Mobile Rechenvorrichtung (150), aufweisend:
einen Controller (154);
ein drahtloses Kurzstrecken-Kommunikations-Interface (156); und
ein Langstrecken-Breitband-Kommunikations-Interface (158),
wobei der Controller (154) zur Ausführung der für die mobile Vorrichtung (MD) in dem Verfahren gemäß einem der Ansprüche 1-15 definierten Funktionalität ausgebildet ist.

17. Kommunikationssystem (100), aufweisend:
eine oder mehrere mobile Rechenvorrichtungen (150) gemäß Anspruch 16;
die erste Sendefunktion (TX1), wie in dem Verfahren gemäß einem der Ansprüche 1-15 definiert; und
die zweite Sendefunktion (TX2), wie in dem Verfahren gemäß einem der Ansprüche 1-15 definiert.

18. Kommunikationssystem (100) nach Anspruch 17, wobei die ersten und zweiten Sendefunktionen (TX1, TX2) mit Bluetooth Low Energy, BLE, konform sind.

## Revendications

1. Procédé pour entraîner une activité dépendant de la proximité par un dispositif mobile (MD), le procédé comprenant les étapes suivantes :
le dispositif mobile (MD) reçoit (300) un premier signal de communication sans fil à courte portée (S1) à partir d'une première fonction d'émetteur (TX1) au niveau ou à proximité d'un emplacement physique (PL) lorsqu'il est situé sur une première distance (D1) ou plage de distance (DR1) par rapport à l'emplacement physique (PL) ou la première fonction d'émetteur (TX1) ;
le dispositif mobile (MD) réagit (310) au premier signal de communication sans fil à courte portée (S1) reçu par balayage pour une deuxième fonction d'émetteur (TX2) au niveau ou à proximité de l'emplacement physique (PL), l'identité d'émetteur de la deuxième fonction d'émetteur (TX2) étant indiquée par des informations contenues dans le premier signal de communication sans fil à courte portée (S1) ;
le dispositif mobile (MD) reçoit (320) un deuxième signal de communication sans fil à courte portée (S2) à partir de la deuxième fonction d'émetteur (TX2) lorsqu'il est situé sur une deuxième distance (D2) ou plage de distance (DR2) par rapport à l'emplacement physique (PL) ou la deuxième fonction d'émetteur (TX2), la deuxième distance (D2) ou plage de distance (DR2) étant inférieure à la première distance (D1) ou plage de distance (DR1) ;
le dispositif mobile (MD) entraîne (330) un enregistrement d'informations (WCSINFO) contenues dans le deuxième signal de communication sans fil à courte portée (S2) ;
le dispositif mobile (MD) entraîne (340) une résolution des informations enregistrées (WCSINFO) pour déterminer une activité (ACT) associée ; et
le dispositif mobile entraîne (350) une exécution de l'activité (ACT) déterminée.

2. Procédé selon la revendication 1, dans lequel le dispositif mobile (MD) entraîne (330) l'enregistrement des informations (WCSINFO) contenues dans le deuxième signal de communication sans fil à courte portée (S2) en stockant les informations (WCSINFO) dans une structure de données (153) dans une mémoire locale (152) du dispositif mobile (MD).

3. Procédé selon la revendication 1, dans lequel le dispositif mobile (MD) entraîne (330) l'enregistrement des informations (WCSINFO) contenues dans le deuxième signal de communication sans fil à courte portée (S2) en communiquant (120) les informations (WCSINFO) sur un réseau de communication à large bande (110) pour entraîner le stockage des informations (WCSINFO) dans une structure de données (103) dans un dispositif de stockage (RSFDB) associé à une fonction de serveur à distance (RSF).

4. Procédé selon une quelconque revendication précédente, dans lequel le dispositif mobile (MD) entraîne la résolution (355) des informations enregistrées (WCSINFO) en mettant en correspondance les informations enregistrées (WCSINFO) par rapport à une table à consulter (154) dans une mémoire locale (152) du dispositif mobile (MD) et en déterminant l'activité (ACT) associée à partir d'une correspondance résultante dans la table à consulter (154).

5. Procédé selon une quelconque revendication précédente, dans lequel le dispositif mobile (MD) entraîne la résolution (340) des informations enregistrées (WCSINFO) par :
la demande (122), sur un réseau de communication à large bande (110), à une fonction de serveur à distance (RSF) de mettre en correspondance les informations enregistrées (WCSINFO) par rapport à une table à consulter (104) dans un dispositif de stockage (RSFDB) associé à une fonction de serveur à distance (RSF) ;
la réception (124), sur le réseau de communication à large bande (110), d'informations de résultat (RESULT) concernant une correspondance résultante dans la table à consulter (104) ; et
la détermination de l'activité (ACT) associée à partir des informations de résultat (RESULT) reçues.

6. Procédé selon une quelconque revendication précédente, dans lequel l'activité (ACT) déterminée concerne une récupération, sur un réseau de communication à large bande (110), d'un contenu numérique (DIGCONT) à partir d'une fonction de serveur à distance (RSF) vers le dispositif mobile (MD).

7. Procédé selon la revendication 6, comprenant en outre la présentation du contenu numérique (DIGCONT) récupéré dans une interface utilisateur (151) du dispositif mobile (MD).

8. Procédé selon la revendication 6 ou 7, comprenant en outre la transmission (128), par une communication sans fil à courte portée, du contenu numérique (DIGCONT) récupéré à un terminal de service (ST) .

9. Procédé selon l'une quelconque des revendications 1 à 5, dans lequel l'activité (ACT) déterminée concerne une récupération, sur un réseau de communication à large bande (110), d'un contenu numérique (DIGCONT) à partir d'une source distante (RS) vers une fonction de serveur à distance (RSF), la fonction de serveur à distance (RSF) stockant le contenu numérique (DIGCONT) récupéré dans une structure de données (105) dans un dispositif de stockage (RSFDB) associé à la fonction de serveur à distance (RSF), conjointement à des informations (106) liant le contenu numérique (DIGCONT) stocké au dispositif mobile (MD) ou à un utilisateur (U) de celui-ci.

10. Procédé selon une quelconque revendication précédente, dans lequel le dispositif mobile (MD) entraîne une exécution de l'activité (ACT) déterminée en exécutant une fonction prédéfinie dans le dispositif mobile (MD).

11. Procédé selon une quelconque revendication précédente, dans lequel le dispositif mobile (MD) entraîne une exécution de l'activité (ACT) déterminée en demandant, sur un réseau de communication à large bande (110), à une fonction de serveur à distance (RSF) d'exécuter une fonction prédéfinie.

12. Procédé selon la revendication 11, dans lequel la fonction prédéfinie exécutée par la fonction de serveur à distance (RSF) est la passation d'une commande pour un bien ou un service.

13. Procédé selon une quelconque revendication précédente,
dans lequel le dispositif mobile (MD) entraîne un enregistrement de premières informations (WCSINFO1) quand le dispositif mobile (MD) est à proximité d'un premier emplacement physique (PL1) ;
dans lequel le dispositif mobile (MD) entraîne également un enregistrement de deuxièmes informations (WCSINFO2) quand le dispositif mobile (MD) est à proximité d'un deuxième emplacement physique (PL2) différent du premier emplacement physique (PL1) ; et
dans lequel, après avoir entraîné un enregistrement des deuxièmes informations (WCSINFO2), le dispositif mobile (MD) entraîne une résolution des premières informations enregistrées (WCSINFO1) ainsi que des deuxièmes informations enregistrées (WCSINFO2) pour déterminer respectivement une première activité (ACT1) associée et une deuxième activité (ACT2) associée.

14. Procédé selon une quelconque revendication précédente, dans lequel l'emplacement physique est dans ou au niveau d'un parmi :
un local de vente au détail,
un local de bureau,
un local résidentiel,
un local industriel,
un local d'exposition, ou
un cadre d'extérieur.

15. Procédé selon la revendication 14, dans lequel l'emplacement physique est dans ou au niveau d'un local résidentiel, le procédé impliquant en outre :
le dispositif mobile (MD) qui reçoit des informations de chaînes de télévision actuelles à partir d'un dispositif de télévision ;
le dispositif mobile (MD) qui enregistre une heure actuelle de la journée ; et
le dispositif mobile (MD) qui entraîne (340) l'enregistrement (345) des informations (WCSINFO) contenues dans le deuxième signal de communication sans fil à courte portée (S2) en communiquant lesdites informations (WCSINFO) conjointement aux informations de chaînes de télévision actuelles reçues et à l'heure actuelle de la journée enregistrée sur un réseau de communication à large bande (110) à une fonction de serveur à distance (RSF).

16. Dispositif informatique mobile (150) comprenant :
un dispositif de commande (154) ;
une interface de communication sans fil à courte portée (156) ; et
une interface de communication à large bande à longue portée (158),
dans lequel le dispositif de commande (154) est configuré pour réaliser la fonctionnalité définie pour le dispositif mobile (MD) dans le procédé selon l'une quelconque des revendications 1 à 15.

17. Système de communication (100) comprenant :
un ou plusieurs dispositifs informatiques mobiles (150) tels que définis dans la revendication 16 ;
la première fonction d'émetteur (TX1) telle que définie dans le procédé selon l'une quelconque des revendications 1 à 15 ; et
la deuxième fonction d'émetteur (TX2) telle que définie dans le procédé selon l'une quelconque des revendications 1 à 15.

18. Système de communication (100) selon la revendication 17, dans lequel les première et deuxième fonctions d'émetteur (TX1, TX2) sont conformes à Bluetooth à faible énergie, BLE.
